# DEMANDE DE BREVET EUROPEEN

(11) **EP 1 293 856 A1**
(43) Date de publication de la demande: **19.03.2003**
(21) Numéro de dépôt: 01203541.6
(22) Date de dépôt: 18.09.2001
(51) Int. Cl.: G06F 1/00

(54) **Circuit Intégré sécurisé comprenant des parties à caractère confidentiel, et procédé pour sa mise en action**

(71) Demandeur: EM Microelectronic-Marin SA, 2074 Marin (CH)
(72) Inventeur: Hugues, Blangy, 2000 Neuchàtel (CH); Albin, Pevec, 9220 Lendava (SI)
(74) Mandataire: Thérond, Gérard Raymond

(57) **Abrégé**

Le circuit intégré sécurisé (1) comprend en outre des moyens de mémorisation (2) dans lesquels sont enregistrées des données confidentielles, telles qu'un programme de chiffrement et au moins une clé de chiffrement, et une unité à microprocesseur (3) pour la mise en fonction du programme de chiffrement. Ledit circuit comprend encore un étage oscillateur (4, 5) fournissant des signaux d'horloge (CLK) pour cadencer notamment le déroulement des opérations dans l'unité à microprocesseur (3), et un générateur de nombres aléatoires (6) relié à l'unité à microprocesseur. Un nombre aléatoire (RNG osc) produit par le générateur de nombres aléatoires est fourni à l'entrée de l'étage oscillateur pour le configurer de manière à ce que la fréquence des signaux d'horloge fournis par l'étage oscillateur dépend dudit nombre aléatoire.

## Description

L'invention concerne un circuit intégré sécurisé qui comprend des parties à caractère confidentiel. Le circuit intégré comprend des moyens de mémorisation dans lesquels sont enregistrées des données confidentielles, telles qu'un programme de chiffrement et au moins une clé de chiffrement, une unité à microprocesseur pour la mise en fonction du programme de chiffrement, un étage oscillateur fournissant des signaux d'horloge pour cadencer notamment le déroulement des opérations dans l'unité à microprocesseur, et un générateur de nombres aléatoires relié à l'unité à microprocesseur. Les données confidentielles concernent notamment des fonctions mathématiques à protéger, des programmes de chiffrement et des codes d'accès personnel.

L'invention concerne également un procédé de mise en action du circuit intégré sécurisé.

Les circuits intégrés sécurisés sont utilisés notamment dans des dispositifs électroniques spécifiques dans lesquels des données à caractère confidentiel doivent être protégées. Lesdits circuits peuvent être appliqués par exemple dans des unités à micro-calculateur ou dans des circuits à logiques câblées, telles que des badges ou des cartes à puce ou dans des domaines de transmission d'informations codées.

Dans le domaine technique des cartes à puces, telles que des cartes bancaires, au moins un circuit intégré sécurisé est intégré dans ladite carte. Des plages de contact électrique, qui sont reliées au circuit intégré, sont réalisées sur la carte à puce de manière à servir d'interface avec un dispositif de lecture et/ou d'écriture de données spécifiques. Lorsque la carte à puce est introduite dans le dispositif de lecture et/ou d'écriture, un programme de chiffrement à clé de chiffrement peut être mis en fonction dans l'unité à microprocesseur dès que le circuit intégré est mis sous tension.

Habituellement, les temps d'exécution des diverses séquences d'instructions du programme, ainsi que les signaux d'horloge à fréquence unique pour cadencer les opérations traitées dans l'unité à microprocesseur, sont bien définis. De ce fait, des personnes non autorisées peuvent frauduleusement déchiffrer plusieurs données confidentielles relativement facilement à l'aide de techniques d'analyse de chiffrement.

Les techniques d'analyse utilisées sont par exemple du type DPA (Differential Power Analysis en terminologie anglaise) ou du type DFA (Differential Fault Analysis en terminologie anglaise). La première de ces techniques consiste à mesurer l'amplitude du courant consommé sur des bornes de contact électrique du circuit intégré durant toutes les séquences d'instruction du programme. Ceci permet de retrouver d'une part la fréquence unique des signaux d'horloge et d'autre part la ou les clés de chiffrement utilisées dans le programme de chiffrement. La seconde technique consiste à faire exécuter plusieurs fois le programme de chiffrement et à l'interrompre à des moments précis afin de le perturber (méthode déterministe). De cette façon et sur la base des bons et mauvais résultats de calcul obtenus, il est possible de décoder les clés de chiffrement.

Une personne mal intentionnée peut également analyser sans trop de difficultés des zones mémoires à données confidentielles à l'aide d'un matériel de test adéquat étant donné que le circuit intégré est cadencé habituellement par des signaux d'horloge à fréquence unique. Pour ce faire, les plages métalliques et la couche de passivation de protection recouvrant le circuit intégré sécurisé doivent être retirées. Après le retrait des couches de protection, des pointes de test sont posées sur les zones mémoires, et plusieurs corrélations entre les diverses zones mémoires testées sont réalisées pour découvrir des données confidentielles mémorisées.

Plusieurs solutions techniques ont déjà été proposées pour empêcher une personne mal intentionnée de découvrir les données confidentielles par le biais des techniques d'analyse de chiffrement. Une solution consiste par exemple à ralentir ou à accélérer le déroulement du programme de chiffrement à l'aide de signaux d'horloge dont la fréquence est variable. On peut citer par exemple le document WO 97/33217 qui décrit un circuit intégré sécurisé qui est muni de moyens de décorrélation du déroulement d'au moins une séquence d'instruction d'un programme de chiffrement. Le circuit intégré comprend principalement des moyens de mémorisation, dans lesquels un programme principal de chiffrement et un programme secondaire sont mémorisés, et une unité à microprocesseur reliée aux moyens de mémorisation pour la mise en fonction du programme principal et/ou du programme secondaire.

Les moyens de décorrélation du circuit intégré comprennent notamment un oscillateur pour fournir des signaux internes d'horloge à fréquence constante, et un générateur aléatoire recevant les signaux internes d'horloge ou des signaux externes d'horloge par l'intermédiaire d'un circuit logique de sélection. Le générateur aléatoire fournit des signaux impulsionnels à répartition aléatoire par l'intermédiaire d'un circuit calibrateur pour cadencer les opérations dans l'unité à microprocesseur. Il est à noter que les signaux internes d'horloge sont désynchronisés et déphasés par rapport aux signaux externes d'horloge de manière à permettre à l'unité à microprocesseur de passer à un fonctionnement décorrélé.

Les moyens de décorrélation comprennent encore un temporisateur destiné à fournir des signaux d'interruption à l'unité à microprocesseur pour interrompre momentanément le déroulement du programme principal. Les intervalles de temps entre chaque signal d'interruption peuvent être définis de façon aléatoire par des nombres aléatoires fournis au temporisateur par le générateur aléatoire. De même, lors d'une interruption, il peut être prévu de mettre en fonction une routine d'interruption ou un programme secondaire de manière à empêcher toute analyse des données confidentielles du circuit intégré.

Un inconvénient de la solution décrite dans le document WO 97/33217 est que les signaux internes d'horloge sont des signaux impulsionnels à fréquence constante. Ainsi, le générateur aléatoire, qui reçoit les signaux internes d'horloge, ne peut fournir que des signaux impulsionnels à périodicité variable dont la fréquence moyenne est inférieure aux signaux internes d'horloge. Il faut savoir que les signaux impulsionnels à répartition aléatoire ne sont obtenus qu'en supprimant de façon aléatoire certaines impulsions des signaux internes d'horloge sans modifier la largeur de chaque impulsion d'horloge. De manière à ne pas trop ralentir le déroulement du programme principal, il est donc nécessaire d'avoir des signaux internes d'horloge à fréquence suffisamment élevée ce qui constitue un autre inconvénient.

L'invention a donc pour but principal de pallier les inconvénients de l'art antérieur en fournissant un circuit intégré sécurisé ayant des moyens simplifiés pour varier de façon aléatoire le temps du déroulement d'un programme de chiffrement afin d'empêcher une analyse de chiffrement.

A cet effet, l'invention a pour objet un circuit intégré sécurisé du type cité ci-devant, dans lequel l'étage oscillateur est agencé pour recevoir au moins un nombre aléatoire produit par le générateur de nombres aléatoire de manière à configurer ledit étage oscillateur pour qu'il produise des signaux d'horloge dont la fréquence dépend du nombre aléatoire reçu.

Un avantage du circuit intégré sécurisé, selon l'invention, est que l'étage oscillateur peut facilement être configuré à l'aide de chaque nombre aléatoire reçu successivement afin de produire des signaux d'horloge à fréquence aléatoire. Cela permet rapidement de changer la fréquence des signaux d'horloge de cadencement des opérations de l'unité à microprocesseur. A chaque mise sous tension du circuit intégré sécurisé ou lors de la mise en fonction du programme de chiffrement, la fréquence des signaux d'horloge va changer, car le générateur de nombres aléatoires va fournir un nombre aléatoire à l'étage oscillateur, ledit nombre aléatoire étant différent du précédent nombre aléatoire produit.

Un autre avantage du circuit intégré sécurisé, selon l'invention, est que les signaux d'horloge fournis par l'étage oscillateur sont des signaux à impulsions rectangulaires régulières, c'est-à-dire que l'espace entre deux impulsions est sensiblement identique à la largeur de chaque impulsion. De ce fait, chaque nombre aléatoire fourni à l'entrée de l'étage oscillateur aura une influence équivalente sur la largeur des impulsions et sur l'espace séparant deux impulsions. Afin de limiter l'usage de signaux d'horloge externe lors de l'introduction par exemple d'une carte à circuit sécurisé dans un dispositif de lecture et/ou d'écriture, la fréquence des signaux d'horloge interne est ajustée à une valeur supérieure à la fréquence des signaux externes.

Un autre avantage du circuit intégré sécurisé, selon l'invention, est qu'un temporisateur fournit des signaux d'interruption à l'unité à microprocesseur afin d'interrompre le déroulement du programme de chiffrement. Les interruptions du déroulement du programme peuvent être faites de façon aléatoire si le temporisateur reçoit un nombre aléatoire du générateur de nombres aléatoires. De plus, chaque signal d'interruption peut être fourni sur la base d'un certain nombre d'impulsions des signaux d'horloge à fréquence aléatoire. Le nombre d'impulsions compté dans le temporisateur peut être dépendant du nombre aléatoire reçu par le temporisateur. Ainsi, le temps de déroulement du programme ne peut pas être déterminé précisément ce qui empêche une analyse de chiffrement du circuit intégré sécurisé.

Il peut être prévu également qu'à la réception d'un signal d'interruption, l'unité à microprocesseur mette en fonction une routine d'interruption entre des séquences d'instruction du programme de chiffrement. Dès la réception du signal d'interruption, l'unité à microprocesseur peut commander la transmission d'un nombre aléatoire à l'étage oscillateur afin qu'il produise un changement de fréquence des signaux d'horloge.

L'invention a également pour objet un procédé de mise en action d'un circuit intégré sécurisé du type cité ci-devant, dans lequel il comprend les étapes de :
- générer au moins un nombre aléatoire dans le générateur de nombres aléatoires,
- transmettre ledit nombre aléatoire produit à l'étage oscillateur,
- produire des signaux d'horloge dans l'étage oscillateur dont la fréquence dépend du nombre aléatoire reçu afin de cadencer notamment le déroulement des opérations dans l'unité à microprocesseur.

Les buts, avantages et caractéristiques du circuit intégré sécurisé apparaîtront mieux dans la description suivante de formes d'exécution illustrées par les dessins sur lesquels :
la figure 1 représente schématiquement les blocs fonctionnels du circuit intégré sécurisé selon l'invention,
la figure 2a représente différents éléments électroniques composant l'étage oscillateur du circuit intégré sécurisé selon l'invention,
la figure 2b représente les composants d'un circuit à déclenchement bistable pour produire des signaux à impulsions rectangulaires de l'étage oscillateur montré à la figure 2a, et
la figure 3 représente un organigramme du déroulement des opérations lors de la mise en fonction du programme de chiffrement dans l'unité à microprocesseur du circuit intégré sécurisé selon l'invention.

La description suivante ne décrira pas en détail tous les composants ou blocs électroniques du circuit intégré sécurisé qui sont bien connus de l'homme du métier dans ce domaine technique. Uniquement les composants ou blocs électroniques de l'étage oscillateur seront décrits de manière plus détaillée.

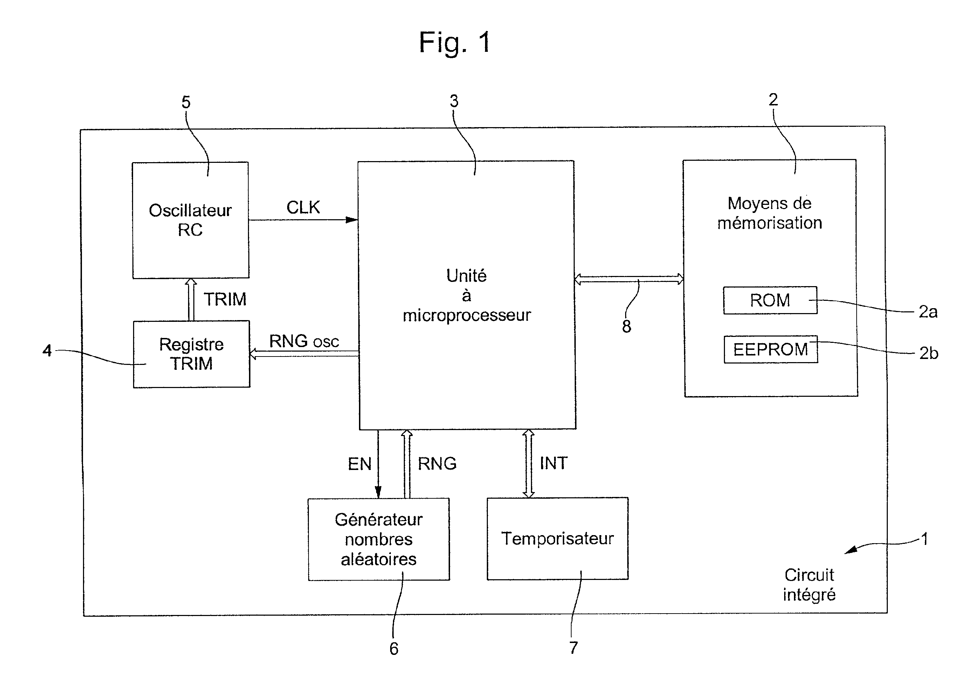

Les différents blocs essentiels, que comporte le circuit intégré sécurisé, sont montrés à la figure 1. Le circuit intégré sécurisé 1 comprend tout d'abord des moyens de mémorisation 2 dans lesquels sont mémorisés notamment un programme de chiffrement et au moins une clé de chiffrement, et une unité à microprocesseur 3 reliée par un bus de données 8 aux moyens de mémorisation, ladite unité permettant la mise en fonction du programme de chiffrement à l'aide de la clé de chiffrement.

Le programme de chiffrement est par exemple un algorithme de type DES bien connu par les spécialistes dans ce domaine technique. Ce programme est mémorisé notamment dans une mémoire non-volatile ROM 2a. Une mémoire EEPROM 2b est également prévue des les moyens de mémorisation 2 pour enregistrer plusieurs données lors de l'exécution du programme de chiffrement ou pour conserver des données confidentielles, telles que des codes d'accès personnel ou des clés de chiffrement. La ou les clés de chiffrement sont utilisées lors de l'exécution du programme de chiffrement par l'unité à microprocesseur. Bien entendu, les moyens de mémorisation 2 peuvent comprendre d'autres types de mémoires, telles qu'une mémoire Flash ou une mémoire vive de type RAM, non représentées sur la figure 1.

Le circuit intégré sécurisé comprend également un générateur de nombres aléatoires 6 relié par un bus RNG à l'unité à microprocesseur 3, et un étage oscillateur qui est composé d'un registre 4 de réception d'un nombre aléatoire transmis par l'unité à microprocesseur 3 à travers le bus RNGosc, et d'un oscillateur de type RC 5 fournissant des signaux d'horloge CLK notamment à l'unité à microprocesseur. L'adressage, l'écriture et/ou la lecture des moyens de mémorisation peuvent être cadencés directement par les signaux d'horloge CLK ou par des signaux provenant d'un dispositif de gestion des signaux d'horloge de l'unité à microprocesseur. Le circuit intégré comprend encore un temporisateur 7 destiné à fournir des signaux d'interruption INT à l'unité à microprocesseur pour interrompre momentanément les opérations traitées dans ladite unité.

Afin d'empêcher une analyse de chiffrement, la fréquence des signaux d'horloge CLK produit par l'étage oscillateur 4, 5 doit pouvoir varier de façon aléatoire. En fonctionnement normal, c'est-à-dire notamment pendant l'exécution du programme de chiffrement, l'étage oscillateur peut être configuré par des nombres aléatoires de manière à produire des signaux d'horloge dont la fréquence se situe dans une gamme de fréquence allant de 13 à 30 MHz. Toutefois pour l'unité à microprocesseur, il est préférable que la fréquence ne dépasse pas 24 MHz. Ainsi, l'unité à microprocesseur peut comprendre un dispositif de gestion des signaux d'horloge qui permet d'opérer des divisions de fréquence pour certaines opérations traitées ou de diriger les signaux d'horloge CLK vers le temporisateur 7 ou les moyens de mémorisation 2.

Il peut être souhaité encore que, dans des périodes de fonctionnement du circuit intégré sans exécution du programme de chiffrement, la fréquence des signaux d'horloge produits par l'étage oscillateur soit fixée à une valeur basse, telle qu'à 1,25 MHz. Dans ce cas, l'étage oscillateur est configuré pour ne produire que des signaux d'horloge à fréquence basse fixe indépendamment d'un nombre aléatoire introduit dans le registre de l'étage oscillateur. Cette réduction de fréquence permet d'économiser sur le courant consommé par le circuit intégré. De même, pour réduire la consommation dans certaines périodes de fonctionnement du circuit intégré sécurisé, le générateur de nombre aléatoire et/ou le temporisateur peuvent être désactivés momentanément.

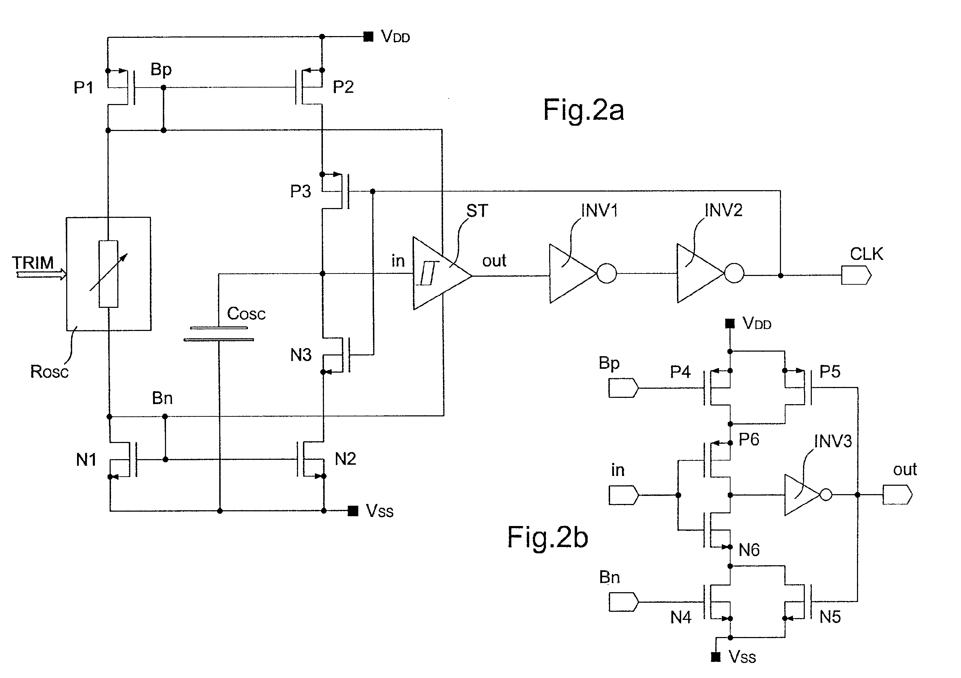

La variation de fréquence peut intervenir à chaque mise sous tension du circuit, lors de l'exécution du programme de chiffrement dans l'unité à microprocesseur, ou lors de la réception d'un signal d'interruption dans l'unité à microprocesseur, ou à chaque fourniture d'un nombre aléatoire provenant du générateur de nombres aléatoires 6. L'oscillateur 5 qui compose ledit étage oscillateur sera expliqué de manière plus détaillée ci-dessous en référence aux figures 2a et 2b.

Le générateur de nombres aléatoires 6 est habituellement utilisé par exemple dans des procédés d'authentification du circuit ou pour des fonctions de chiffrement. Le générateur, bien connu dans ce domaine technique, peut être composé d'un oscillateur non synchronisé indépendant de l'étage oscillateur, d'un compteur pseudo-aléatoire cadencé par les signaux d'horloge non synchronisés, et d'un registre de sortie relié au compteur pour fournir des nombres aléatoires à chaque impulsion de chargement. La fréquence des signaux d'horloge non synchronisés est dans la gamme de 30 à 90 kHz.

Les nombres aléatoires produits par le générateur sont des mots binaires qui peuvent être limités à 8 bits. Par une commande de lecture EN de l'unité à microprocesseur, les nombres aléatoires sont transmis tout d'abord à l'unité à microprocesseur par le bus de nombres aléatoires RNG. Ensuite, l'unité à microprocesseur transmet à travers le bus RNGosc au moins un nombre aléatoire reçu afin de charger notamment le registre 4 de l'étage oscillateur pour la variation de la fréquence des signaux d'horloge CLK.

La fourniture de nombres aléatoires successifs au registre 4 de l'étage oscillateur peut être commandée par l'unité à microprocesseur, notamment pendant la période de mise en fonction du programme de chiffrement dans ladite unité. Il peut être prévu que l'unité à microprocesseur 3 transmettent tous les nombres aléatoires reçus au registre 4.

Dans un mode de réalisation non représenté, l'étage oscillateur peut recevoir successivement des nombres aléatoires qui proviennent directement du générateur de nombres aléatoires.

Le temporisateur 7 est cadencé par les signaux d'horloge dont la fréquence varie en fonction d'un nombre aléatoire fourni dans le registre 4 de l'étage oscillateur. Après un certain nombre d'impulsions d'horloge CLK reçu par l'intermédiaire de l'unité à microprocesseur 3, le temporisateur produit un signal d'interruption qu'il envoie par le bus INT vers l'unité à microprocesseur 3 afin d'interrompre momentanément les opérations traitées dans ladite unité.

Le temporisateur 7 peut recevoir également des nombres aléatoires par l'intermédiaire de l'unité à microprocesseur 3 de manière à ce que l'intervalle entre deux signaux d'interruption varie de façon aléatoire. On peut imaginer qu'un nombre aléatoire introduit dans le temporisateur influe sur le nombre de signaux d'horloge CLK reçus qui déclenche un signal d'interruption. De ce fait, les interruptions sont fournies de façon aléatoire à l'unité à microprocesseur.

Ainsi, les interruptions du programme de chiffrement dans l'unité à microprocesseur permettent également d'empêcher une personne de découvrir les données confidentielles du circuit intégré sécurisé. Il est, par exemple, prévu au moins 16 interruptions et au plus 32 interruptions du programme de chiffrement exécuté dans l'unité à microprocesseur.

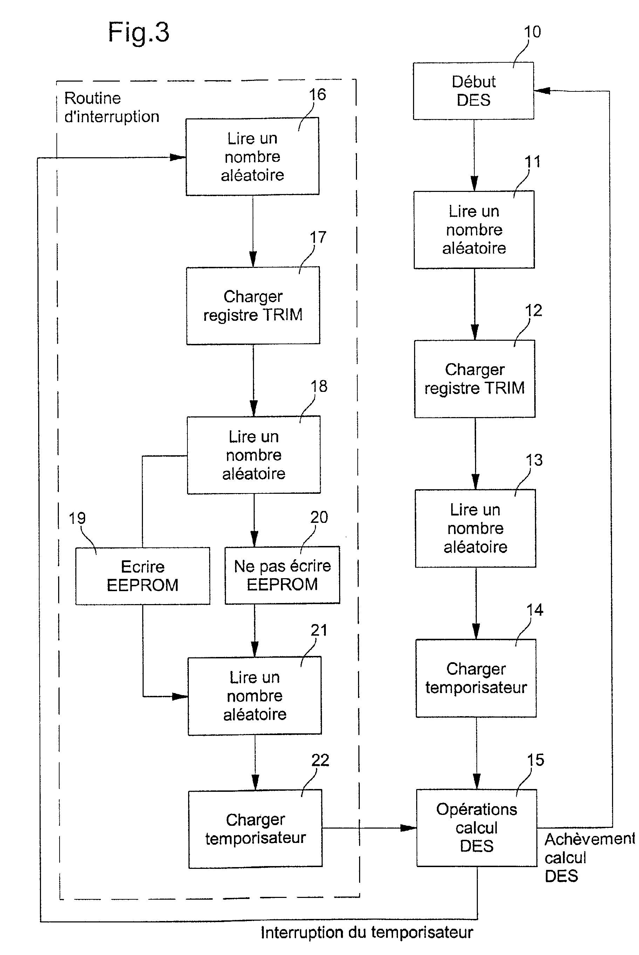

Comme cela sera expliqué en référence à la figure 3, il est encore prévu que lors d'une interruption du programme de chiffrement, une routine d'interruption soit activée dans l'unité à microprocesseur. Cette routine ajoute de façon aléatoire notamment des séquences d'instructions dans le programme de chiffrement interrompus, ce qui empêche de définir un temps d'exécution précisément du programme mis en fonction. De plus, des variations de courant consommé pendant l'exécution du programme de chiffrement et de la routine d'interruption sont produites en imposant de façon aléatoire d'enregistrer des données ou de lire les moyens de mémorisation. De ce fait, une analyse de chiffrement par exemple de type DPA ne peut être pratiquée pour découvrir le contenu confidentiel du circuit intégré sécurisé ce qui constitue un but à atteindre avec le circuit intégré de la présente invention.

L'étage oscillateur sera maintenant expliqué de manière plus détaillée en référence aux figures 2a et 2b. Cet étage est connecté à une source de tension régulée entre deux bornes de potentiel Vdd et Vss. Le potentiel Vdd a une valeur inférieure à 3 V, de préférence à 2,8 V, alors que le potentiel Vss vaut en principe 0 V, ce qui correspond à la borne de masse du circuit intégré.

L'oscillateur de type RC de l'étage oscillateur comprend un bloc de résistances Rosc. Ce bloc de résistances est configuré par un mot binaire TRIM provenant du registre de l'étage oscillateur. Ce mot binaire correspond à un nombre aléatoire placé dans ledit registre.

Le bloc de résistances est arrangé pour placer un certain nombre de résistances sélectionnables en parallèle ou en série grâce à des éléments de commutation tels que des transistors NMOS ou PMOS non représentés. La grille de chaque transistor peut être commandée par une tension fonction du mot binaire TRIM reçu depuis le registre de manière à rendre le transistor correspondant conducteur ou non conducteur, et à brancher des résistances en parallèle ou en série. La valeur de résistances choisi par le mot binaire TRIM détermine avec un condensateur Cosc la valeur de la fréquence des signaux d'horloge CLK produit en sortie de l'oscillateur.

Le bloc de résistances Rosc configuré permet la génération de sources de courant dans un premier miroir de courant connecté à une borne de potentiel positive Vdd, et dans un second miroir de courant connecté à une borne de potentiel négative Vss. Ledit bloc est donc placé en série entre les deux miroirs de courant.

Le premier miroir de courant comprend un premier transistor PMOS P1 et un second transistor PMOS P2, ainsi qu'un quatrième transistor PMOS P4 qui sera expliqué en référence à la figure 2b. La grille Bp et le drain du premier transistor P1 sont connectés à une borne positive du bloc de résistances Rosc, et la source du transistor P1 est reliée à la borne Vdd. La grille du second transistor P2 est reliée à la grille Bp du premier transistor P1, et la source du second transistor P2 est reliée à la borne Vdd. Le drain du second transistor est quant à lui relié à la source d'un troisième transistor PMOS P3.

Le second miroir de courant comprend un premier transistor NMOS N1 et un second transistor NMOS N2, ainsi qu'un quatrième transistor NMOS N4 qui sera expliqué en référence à la figure 2b. La grille Bn et le drain du premier transistor N1 sont connectés à une borne négative du bloc de résistances Rosc, et la source du premier transistor N1 est reliée à la borne Vss. La grille du second transistor N2 est reliée à la grille Bn du premier transistor N1, et la source du second transistor N2 est reliée à la borne Vss. Le drain du second transistor N2 est quant à lui relié à la source d'un troisième transistor NMOS N3.

Les troisièmes transistors P3 et N3 ont chacun leur drain connecté à une borne positive d'un condensateur Cosc, dont la borne négative est reliée à Vss. Les grilles des deux troisièmes transistors P3 et N3 sont reliées ensemble. Si le potentiel des grilles P3 et N3, reliées à la sortie des signaux d'horloge CLK, est proche de Vdd, le transistor P3 est bloqué, alors que le transistor N3 devient conducteur pour laisser passer le courant dupliqué du second miroir de courant. Le condensateur Cosc se décharge donc grâce au courant dupliqué dans le second miroir de courant dépendant du bloc de résistances Rosc. Si le potentiel des grilles des transistors P3 et N3, reliées à la sortie des signaux d'horloge CLK, est proche de Vss, le transistor N3 est bloqué, alors que le transistor P3 devient conducteur pour laisser passer le courant dupliqué par le premier miroir de courant. Le condensateur Cosc se charge donc grâce au courant dupliqué dans le premier miroir de courant dépendant du bloc de résistances Rosc.

On comprend bien que les signaux, provenant de la charge et de la décharge du condensateur Cosc, sont des signaux triangulaires. Il est ainsi indispensable de convertir les signaux triangulaires en signaux à impulsions rectangulaires. Cette conversion est opérée notamment par un circuit à déclenchement bistable ST, appelé Schmitt trigger circuit en terminologie anglaise. L'entrée in de ce circuit ST est connectée à la borne positive du condensateur Cosc, ainsi qu'aux drains des transistors P3 et N3, alors que la sortie out de ce circuit ST est connectée à deux inverseurs en série INV1 et INV2. Les signaux d'horloge CLK à impulsions de forme sensiblement rectangulaire sont fournis à la sortie du deuxième inverseur INV2. Il est à noter qu'un certain retard de transition des signaux entre la sortie out et la sortie CLK est réalisée grâce aux deux inverseurs INV1 et INV2.

La sortie out du circuit à déclenchement bistable ST est à l'état haut lors de la décharge du condensateur Cosc. Dans ce cas, le transistor N3 est conducteur, tandis que le transistor P3 est bloqué afin que le courant dupliqué par le second miroir de courant décharge le condensateur Cosc. Cette décharge de Cosc est faite jusqu'à ce que le potentiel dudit condensateur Cosc atteigne un premier niveau de seuil bas détecté par le circuit ST sur l'entrée in. Dès que le potentiel du condensateur Cosc a atteint le premier niveau de seuil, la sortie out du circuit ST passe à l'état bas. Dès cet instant, la transition des signaux à la sortie out du circuit ST impose une transition des signaux d'horloge CLK de l'état haut à l'état bas.

Le passage des signaux d'horloge CLK de l'état haut à l'état bas va permettre de bloquer le transistor N3 et d'ouvrir le transistor P3 afin de charger le condensateur Cosc à l'aide du courant dupliqué dans le premier miroir de courant. Le condensateur Cosc va donc se charger jusqu'à ce que le potentiel dudit condensateur Cosc atteigne un second niveau de seuil haut détecté par le circuit ST sur l'entrée in. Dès que le potentiel du condensateur Cosc a atteint le second niveau de seuil, la sortie out du circuit ST passe à l'état haut. Dès cet instant, la transition des signaux à la sortie out du circuit ST impose une transition des signaux d'horloge CLK de l'état bas à l'état haut.

La figure 2b représente le circuit à déclenchement bistable ST. Les quatrièmes transistors de type PMOS P4 et NMOS N4 ont leurs grilles branchées respectivement à la grille Bp du premier miroir de courant, et à la grille Bn du second miroir de courant. La source du quatrième transistor P4 est reliée à la borne Vdd, alors que la source du quatrième transistor N4 est reliée à la borne Vss. Le drain du transistor P4 est relié à la source d'un sixième transistor PMOS P6 pour lui fournir le courant dupliqué dans le premier miroir de courant, alors que le drain du transistor N4 est relié à la source d'un sixième transistor NMOS N6 pour lui fournir le courant dupliqué dans le second miroir de courant.

Les transistors P6 et N6 ont leurs grilles reliées à l'entrée in du circuit à déclenchement bistable, et leurs drains reliés à l'entrée d'un troisième inverseur INV3. La sortie du troisième inverseur INV3 est relié à la sortie out du circuit à déclenchement bistable, ainsi qu'à la grille d'un cinquième transistor PMOS P5 et à la grille d'un cinquième transistor NMOS N5. La source du cinquième transistor P5 est reliée à la borne Vdd, alors que son drain est relié à la source du sixième transistor P6. La source du cinquième transistor N5 est reliée la borne VSS, alors que son drain est relié à la source du sixième transistor N6.

Lorsque la sortie out passe à l'état haut, le transistor P5 est bloqué, alors que le transistor N5 est conducteur. De ce fait, l'entrée de l'inverseur INV3 est à l'état bas comme les transistors N6 et N5 sont conducteurs en phase de décharge du condensateur Cosc. Le potentiel appliqué à l'entrée in du circuit ST décroît linéairement en phase de décharge du condensateur Cosc. Lorsque le potentiel sur l'entrée in du circuit ST se trouve proche de Vdd/2, le transistor P6 devient conducteur laissant passer le courant dupliqué dans le premier miroir de courant. Toutefois, comme le transistor N5 est pleinement conducteur, il absorbe totalement le courant bien défini fourni par le transistor P6 à travers le transistor N6 conducteur. Ainsi, le potentiel sur l'entrée in pourra descendre jusqu'au premier niveau de seuil bas défini approximativement par la tension de seuil du transistor N6 avant que la sortie out passe de l'état haut à l'état bas.

Lorsque la sortie out passe à l'état bas, le transistor N5 est bloqué, alors que le transistor P5 est conducteur. De ce fait, l'entrée de l'inverseur INV3 est à l'état haut comme les transistor P6 et P5 sont conducteurs en phase de charge du condensateur Cosc. Le potentiel appliqué à l'entrée in du circuit ST croît linéairement en phase de charge du condensateur Cosc. Lorsque le potentiel sur l'entrée in du circuit ST se trouve proche de Vdd/2, le transistor N6 devient conducteur laissant passer le courant dans le second miroir de courant. Toutefois, comme le transistor P5 est pleinement conducteur, il absorbe totalement le courant bien défini fourni par le transistor N6 à travers le transistor P6 conducteur. Ainsi, le potentiel sur l'entrée in pourra monter jusqu'au second niveau de seuil haut défini approximativement par la tension de seuil du transistor P6 avant que la sortie out passe de l'état bas à l'état haut.

Grâce au circuit à déclenchement bistable, les signaux d'horloge CLK sont des signaux à impulsions sensiblement rectangulaires.

La figure 3 représente un organigramme du déroulement des opérations lors de la mise en fonction du programme de chiffrement dans l'unité à microprocesseur.

Dès que le circuit intégré sécurisé est mis sous tension ou lors d'une sélection d'exécution de programme de chiffrement subséquente, le programme de chiffrement de type DES est mis en fonction par l'unité à microprocesseur à l'étape 10. Il est à noter que la sélection de mise en fonction du programme de chiffrement est par exemple faite que une commande externe envoyée au circuit intégré sécurisé. Un nombre aléatoire est lu par l'unité à microprocesseur dans le registre du générateur de nombres aléatoires à l'étape 11. Ce nombre aléatoire est chargé dans le registre TRIM de l'étage oscillateur à l'étape 12 par l'unité à microprocesseur. L'étage oscillateur va donc produire des signaux d'horloge dont la fréquence dépend du nombre aléatoire reçu. L'unité à microprocesseur va ensuite lire un autre nombre aléatoire dans le registre du générateur de nombres aléatoires à l'étape 13 et le transmettre au temporisateur à l'étape 14. Il est clair qu'un même nombre aléatoire pourrait être chargé en même temps dans le registre de l'étage oscillateur et dans le temporisateur. Pendant l'exécution du programme de chiffrement de type DES dans l'unité à microprocesseur à l'étape 15, le temporisateur va transmettre un signal d'interruption à un instant choisi de façon aléatoire en fonction du nombre aléatoire reçu.

Dès que le programme de chiffrement est interrompu momentanément, une routine ou programme secondaire débute et un nombre aléatoire est lu par l'unité à microprocesseur à l'étape 16. A l'étape 17, ce nombre aléatoire est chargé dans le registre TRIM de l'étage oscillateur en remplacement d'un précédent nombre aléatoire. Ainsi, l'étage oscillateur produit des signaux d'horloge dont la nouvelle fréquence dépend du nouveau nombre aléatoire reçu. A l'étape 18, un autre nombre aléatoire est lu par l'unité à microprocesseur. Après cette lecture et en fonction du nombre aléatoire lu, il est opéré de façon aléatoire soit une écriture dans la mémoire EEPROM à l'étape 19, soit aucune écriture dans la mémoire EEPROM à l'étape 20. Comme l'écriture de la mémoire EEPROM lors de la mise en fonction de la routine d'interruption est aléatoire ce qui génère une perte supplémentaire de courant lors de l'écriture, cela rend de ce fait plus difficile toute analyse de chiffrement par une personne non autorisée.

Après cela, un autre nombre aléatoire est lu par l'unité à microprocesseur à l'étape 21. Ce nombre aléatoire est chargé dans le temporisateur à l'étape 22, ce qui va changer le temps entre chaque signal d'interruption produit par le temporisateur. Le programme de chiffrement peut à nouveau continuer à être exécuté dans l'unité à microprocesseur après cette étape 22. Jusqu'à l'achèvement dudit programme, il peut être exécutée plusieurs fois la routine d'interruption, mais cette routine d'interruption n'est pas mise en fonction à chaque fois qu'un signal d'interruption est envoyé à l'unité à microprocesseur.

A partir de la description qui vient d'être faite, de multiples variantes de réalisation du circuit intégré sécurisé peuvent être conçues par l'homme du métier sans sortir du cadre de l'invention. Par exemple, dans l'étage oscillateur, il peut être prévu que le bloc de résistances soit remplacé par une résistance fixe et que le condensateur fixe soit remplacé par un bloc de condensateurs.
Ce bloc de condensateurs peut être configuré par un mot binaire TRIM provenant du registre de l'étage oscillateur comme c'était le cas pour le bloc de résistances. Ce mot binaire correspond à un nombre aléatoire placé dans ledit registre.

La configuration du bloc de condensateurs consiste à placer un certain nombre de condensateurs sélectionnables en parallèle ou en série grâce à des éléments de commutation commandés par exemple par une tension fonction du mot binaire TRIM.

## Revendications

1. Circuit intégré sécurisé (1) comprenant des moyens de mémorisation (2) dans lesquels sont enregistrées des données confidentielles, telles qu'un programme de chiffrement et au moins une clé de chiffrement, une unité à microprocesseur (3) pour la mise en fonction du programme de chiffrement, un étage oscillateur (4, 5) fournissant des signaux d'horloge (CLK) pour cadencer notamment le déroulement des opérations dans l'unité à microprocesseur (3), et un générateur de nombres aléatoires (6) relié à l'unité à microprocesseur, **caractérisé en ce que** l'étage oscillateur est agencé pour recevoir au moins un nombre aléatoire produit par le générateur de nombres aléatoires de manière à configurer ledit étage oscillateur pour qu'il produise des signaux d'horloge dont la fréquence dépend du nombre aléatoire reçu.

2. Circuit intégré selon la revendication 1, **caractérisé en ce que** l'étage oscillateur (4, 5) reçoit au moins un nombre aléatoire produit par le générateur de nombres aléatoires (6) par l'intermédiaire de l'unité à microprocesseur (3).

3. Circuit intégré selon la revendication 1, **caractérisé en ce que**, lors de la mise en fonction du programme de chiffrement dans l'unité à microprocesseur, l'étage oscillateur est agencé pour recevoir plusieurs nombres aléatoires successifs à des intervalles temporels différents pour que la fréquence des signaux d'horloge change en fonction de chaque nombre aléatoire reçu.

4. Circuit intégré selon l'une des revendications précédentes, **caractérisé en ce que** chaque nombre aléatoire, produit par le générateur de nombres aléatoires et fourni à l'étage oscillateur, est placé dans un registre de calibrage (4) dudit étage oscillateur.

5. Circuit intégré selon l'une des revendications précédentes, **caractérisé en ce que** l'étage oscillateur comprend un oscillateur du type RC, et **en ce qu'**un certain nombre de résistances (Rosc) et/ou de condensateurs (Cosc) sont sélectionnables par le nombre aléatoire introduit à l'entrée de l'étage oscillateur de manière à produire des signaux d'horloge (CLK) dont la fréquence dépend de la composante RC sélectionnée en fonction dudit nombre aléatoire reçu.

6. Circuit intégré selon la revendication 5, **caractérisé en ce qu'**un bloc de résistances est placé en série entre un premier miroir de courant (P1, P2) branché à une borne de potentiel positif d'une source de tension, et un second miroir de courant (N1, N2) branché à une borne de potentiel négatif de ladite source de tension, la valeur de la résistance sélectionnée déterminant la valeur du courant à dupliquer dans le premier et le second miroirs de courant, **en ce qu'**un condensateur (Cosc) est chargé ou déchargé par le courant dupliqué dans le premier miroir de courant ou dans le second miroir de courant de manière à produire des signaux triangulaires, **en ce qu'**un circuit à déclenchement bistable (ST) est branché au condensateur afin de fournir en sortie des signaux d'horloge à impulsions rectangulaires en fonction des signaux triangulaires, lesdits signaux d'horloge commandant des éléments de commutation (N3, P3) afin que le condensateur se charge par un courant dupliqué dans le premier miroir de courant quand le potentiel des signaux d'horloge se trouve à l'état bas et afin que le condensateur se décharge par un courant dupliqué dans le second miroir de courant quand le potentiel des signaux d'horloge se trouve à l'état haut.

7. Circuit intégré selon la revendication 1, **caractérisé en ce qu'**il comprend un temporisateur relié à l'unité à microprocesseur, ledit temporisateur (7) fournissant au moins un signal d'interruption (INT) à l'unité à microprocesseur pour interrompre momentanément le déroulement des opérations traitées dans l'unité à microprocesseur.

8. Circuit intégré selon la revendication 7, **caractérisé en ce que**, lors de la mise en fonction du programme de chiffrement dans l'unité à microprocesseur, le temporisateur fournit plusieurs signaux d'interruption à des intervalles temporels séparés.

9. Circuit intégré selon l'une des revendications 7 et 8, **caractérisé en ce que** le temporisateur reçoit des nombres aléatoires à des intervalles temporels séparés, lesdits nombres aléatoires étant produits par le générateur de nombres aléatoires et fournis par l'unité à microprocesseur de manière que le temporisateur fournisse à l'unité à microprocesseur un certain nombre de signaux d'interruption dont l'intervalle entre chaque signal d'interruption dépend du nombre aléatoire reçu.

10. Circuit intégré selon l'une des revendications 7 à 9, **caractérisé en ce que**, lors de la mise en fonction du programme de chiffrement dans l'unité à microprocesseur, une routine d'interruption est activée dès qu'au moins un signal d'interruption est fourni à l'unité à microprocesseur de manière à ajouter de façon aléatoire des séquences d'instruction au programme de chiffrement, et **en ce qu'**un nombre aléatoire est fourni à l'étage oscillateur dès qu'au moins un signal d'interruption est transmis à l'unité à microprocesseur.

11. Circuit intégré selon l'une des revendications 7 à 10, **caractérisé en ce que** le temporisateur est cadencé par les signaux d'horloge fournis par l'étage oscillateur, et **en ce que** l'intervalle temporel entre les signaux d'interruption est défini par un nombre déterminé d'impulsions de signaux d'horloge en fonction d'un nombre aléatoire reçu par le temporisateur.

12. Procédé de mise en action d'un circuit intégré sécurisé selon l'une des revendications précédentes, le circuit comprenant des moyens de mémorisation (2) dans lesquels sont enregistrées des données confidentielles, telles qu'un programme de chiffrement et au moins une clé de chiffrement, une unité à microprocesseur (3) pour la mise en fonction du programme de chiffrement, un étage oscillateur (4, 5) fournissant des signaux d'horloge (CLK) pour cadencer notamment le déroulement des opérations dans l'unité à microprocesseur (3), et un générateur de nombres aléatoires (6) relié à l'unité à microprocesseur, le procédé étant **caractérisé en ce qu'**il comprend des étapes consistant à :
- générer au moins un nombre aléatoire dans le générateur de nombres aléatoires,
- transmettre ledit nombre aléatoire produit à l'étage oscillateur,
- produire des signaux d'horloge dans l'étage oscillateur dont la fréquence dépend du nombre aléatoire reçu afin de cadencer notamment le déroulement des opérations dans l'unité à microprocesseur.

13. Procédé selon la revendication 12, **caractérisé en ce que** l'unité à microprocesseur envoie une commande de lecture (EN) au générateur pour qu'il fournisse à l'unité à microprocesseur au moins un nombre aléatoire généré, et **en ce que** l'unité à microprocesseur transmet à l'étage oscillateur le nombre aléatoire lu.

14. Procédé selon la revendication 13, **caractérisé en ce que**, lors de la mise en fonction du programme de chiffrement dans l'unité à microprocesseur, plusieurs nombres aléatoires sont produits successivement par le générateur, **en ce que** l'unité à microprocesseur lit successivement les nombres aléatoires produits par le générateur à des intervalles temporels différents, et **en ce que** chaque nombre aléatoire est transmis successivement à l'étage oscillateur pour le configurer de manière qu'il produise des signaux d'horloge dont la fréquence change en fonction de chaque nombre aléatoire reçu.

15. Procédé selon la revendication 12, **caractérisé en ce que** des signaux d'interruption (INT) du déroulement du programme de chiffrement dans l'unité à microprocesseur sont fournis par un temporisateur (7) à des intervalles temporels variant de façon aléatoire en fonction d'un nombre aléatoire reçu et/ou en fonction des signaux d'horloge fournis par l'étage oscillateur, et **en ce qu'**une routine d'interruption est activée dès qu'au moins un signal d'interruption est fourni à l'unité à microprocesseur de manière à ajouter de façon aléatoire des séquences d'instruction au programme de chiffrement.
